# EUROPEAN PATENT SPECIFICATION

(11) **EP 0 383 008 B1**
(45) Date of publication and mention of the grant of the patent: **18.05.1994**
(21) Application number: 90100258.4
(22) Date of filing: 08.01.1990
(51) Int. Cl.: B29C 43/02, B65D 1/38

(54) **Molding method, particularly for plastics containers**
Formverfahren, insbesondere für Kunststoffbehälter
Procédé de moulage, notamment pour des conteneurs en plastique

(30) Priority: 15.02.1989 IT 1944689
(43) Date of publication of application: 22.08.1990
(73) Proprietor: ILCA S.p.A., I-26100 Cremona (IT)
(72) Inventor: Balzarini, Vittorio, Cremona (IT); Gaboardi, Mario, Pozzaglio (CR) (IT)
(74) Representative: Forattini, Amelia

(56) References cited:
- DE-A- 1 604 569
- US-A- 3 688 384
- US-A- 4 162 781
- US-A- 4 625 879

## Description

The present invention relates to a molding apparatus particularly for plastics containers.

Plastics containers, such as, for example, file holders, paper trays, data form holders etc., are generally constituted by four sides closed by a base plane and are usually made by compression molding.

Plastics containers of this type can be manufactured in a single molding operation and therefore manufacturing costs are very low; on the contrary, shipping and stocking such containers can be disproportionately expensive because their volume is considerable if compared to their weight.

US Patent No. 4,162,781 (Morcom) discloses a mold for a plastic collapsible container for articles such as bottles. The mold is particularly adapted to produce a carrier which had been traditionally made of paperboard.

The aim of the present invention is to provide a molding method for plastics containers that will drastically reduce their volume when not in use and, at the same time, will allow them to be immediately and easily set in the operating configuration.

Within this aim, an object of the invention is to provide a apparatus for manufacturing a container that may be folded any time it is not in use without the need of any tool.

Another aim of the invention is to provide a method that will not have higher production costs than the known ones.

This aim, as well as these and other objects that will be more apparent hereinafter, are achieved by an apparatus for moulding a plastic container as claimed in the appended claim 1.

Further characteristics and advantages of the invention will be more apparent by the following description of an embodiment of the invention, illustrated, by way of example in the enclosed drawings in which:
Fig. 1 is an isometric view of a container in the molding position according to the invention;
Fig. 2 is a sectioned view according to the line II-II of Fig.1;
Fig. 3 is an isometric view of a container in the operating position according to the invention;
Fig. 4 schematically shows the container folded in the position of non use.

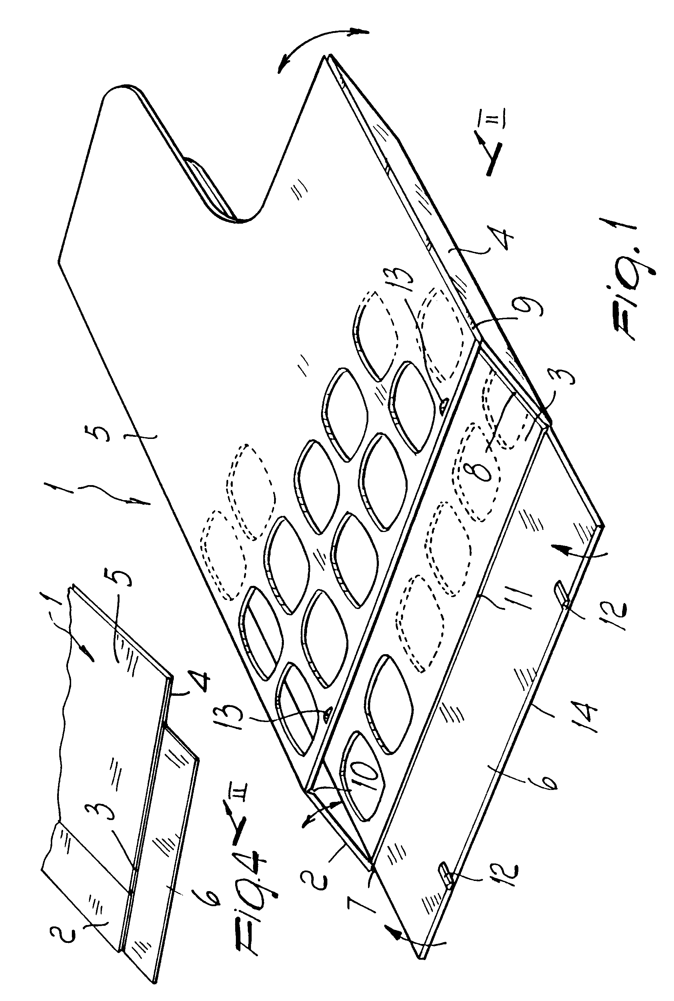

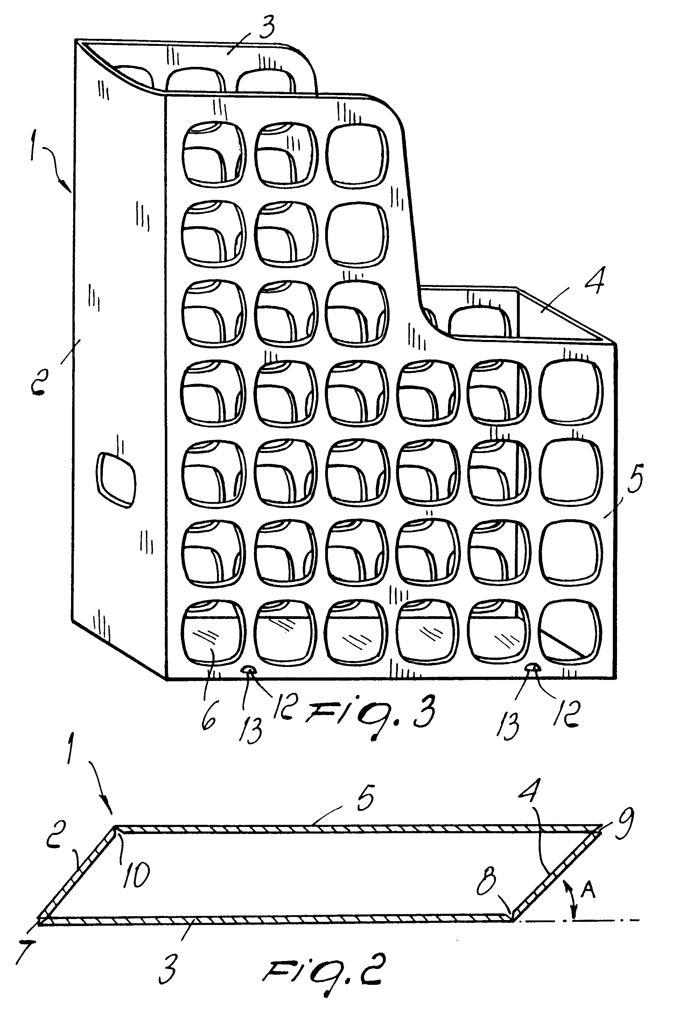

With reference to the cited figures, Fig. 3 shows a container 1 of the type used as file holder and constituted by four sides 2,3,4,5 closed by a base plane 6.

The description of the molding apparatus according to the invention, will be referred to the container 1 but may be of course referred to any type of container.

Fig. 1 shows the shape of the container 1 during molding.

The mold is shaped such that the side 4 and the side 3 of container 1 form an angle A which is lesser than 90° and preferably about 45°.

The opposite sides of the container are parallel to each other, namely, the side 3 is parallel to the side 5, and the side 2 is parallel to the side 4.

On each of the edges between adjacent sides, a groove is provided such that the sides are connected by a section which has a smaller thickness than the thickness of the sides and base.

In particular, there are provided: an outer groove 7 between the sides 2 and 3, an inner groove 8 between the sides 3 and 4, an outer groove 9 between the sides 4 and 5, an inner groove 10 between the sides 5 and 2.

In the mold, the base plane 6 is advantageously coplanar with one of the sides, for example with the side 3 as in the illustrated embodiment.

Furthermore, an inner groove 11, similar to grooves 7,8,9,10, is provided between the connecting edges of the base 6 with the side 3.

All the grooves advantageously have a triangular cross section, as better shown in Fig. 2 which provides a perfect fit of the side edges when the container is folded in the operating (open) configuration.

Advantageously, retaining means are provided to block the free edge 14 of the base 6 to the side 5, for example constituted by lugs 12, on the base 6, adapted to engage notches 13 on the edge of side 5.

The grooves 7,8,9,10,11 allow the container to be folded at the side edges to assume a flat configuration, with all the sides parallel, as shown in Fig. 4.

The apparatus according to the invention therefore enables the molding of the container with its adjacent sides forming a preset angle and providing the container sides connecting edges with a thickness sufficiently small to allow the container to be subsequently folded at the corners.

The container is then extracted from the mold and folded to the flat position shown in Fig. 4.

When the container has to be used, the sides are simply set at right angles and the base 6 is folded to close the bottom and locked by inserting the lugs 12 into the notches 13.

When the base 6 is locked, the container is rigidly locked in its operating boxlike configuration shown in Fig. 3.

If the container is not to be used, the lugs 12 may still be disengaged by the notches 13 and the container may be folded back to the flat position of Fig.4.

It has been seen in practice how the invention achieves the intended aim and objects, by providing a container that can be completely flattened, for shipping or stocking, and rapidly opened in the operating configuration with a very easy operation.

The apparatus according to the invention may have numerous modifications and variations. Furthermore, all the details may be substituted with technically equivalent elements.

The materials employed, as well as the dimensions, may be any according to the specific needs and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An apparatus for molding a plastic container, said container comprising at least four sides (2,3,4,5) closed by a base (6) at the bottom, said sides being connected at connecting edges; said adjacent sides forming an operating angle at a respective of said connecting edges, said operating angle being either one of substantially 90°, in a condition of use of said container, and substantially 0°, in a collapsed condition of said container, said apparatus comprising a mold shaped such that said adjacent sides of said container form a molding angle (A) which is different from said operating angle, a groove (7,8,9,10) being provided at each of said connecting edges, said container being foldable at said connecting edges for defining an open operating position and a closed flattened position after extraction from the mold; said base (6) being molded in a substantially coplanar relationship with one (3) of said sides, said base being connected to one of said sides by a connecting edge, a groove (11) being provided at said base connecting edge; in said open operating position, said base being substantially perpendicular to all of said sides; characterized in that said molding angle (A) is about 45°, and in that said grooves (7,8,9,10,11) have a substantially triangular cross section.

2. The apparatus according to claim 1, characterized in that said base of said container is formed connected to a first (3) of said sides by a base connecting edge, a retaining means (12,13) of said base being provided for locking said base and said sides in at least said open operating position, said open position defining a substantially boxlike configuration of said container.

3. The apparatus according to claim 2, characterized in that said retaining means comprises at least one (12) lug associated with said base (6) at a free edge (14) and at least one notch (13) formed in the base edge of one of said sides (5), said at least one lug being adapted to engage said at least one notch for locking said container in said open operating position.

## Patentansprüche

1. Vorrichtung zum Formen eines Kunststoffbehälters, der mindestens vier Seitenwände (2,3,4,5) aufweist und am Boden mit einer Bodenplatte (6) verschlossen ist, wobei die Seitenwände an Verbindungskanten verbunden sind, benachbarte Seitenwände an ihren jeweiligen Verbindungskanten einen Arbeitswinkel bilden und dieser Winkel entweder in einer Gebrauchsstellung des Behälters im wesentlichen 90° oder in einer zusammen geklapptem Stellung des Behälters im wesentlichen 0° beträgt, wobei die Vorrichtung eine derart ausgebildete Form enthält, daß die benachbarten Seitenwände des Behälters einen Formwinkel (A) bilden, der vom Arbeitswinkel abweicht, eine Nut (7,8,9,10) an jeder der Verbindungskanten vorgesehen wird, der Behälter an den Verbindungskanten faltbar ist, um nach der Entnahme aus der Form eine offene Gebrauchslage und eine geschlossene, flache Lage einnehmen zu können, die Bodenplatte (6) im wesentlichen koplanar mit einer der Seitenwände (3) geformt und durch eine Verbindungskante mit einer der Seitenwände verbunden wird und eine Nut (11) an der Bodenverbindungskante vorgesehen wird, und wobie die Bodenplatte in der offenen Gebrauchslage im wesentlichen senkrecht zu allen Seitenwänden angeordnet ist, dadurch gekennzeichnet, daß der Formwinkel (A) etwa 45° beträgt und die Nuten (7,8,9,10,11) einen im wesentlichen dreieckigen Querschnitt haben.

2. Vorrichtung nach Anspruch 1, dadurch gekennzeichnet, daß die Bodenplatte des Behälters durch eine Bodenverbindungskante an eine erste Seitenwand (3) angeformt ist und Haltemittel (12,13) für die Bodenplatte vorgesehen sind, um diese zumindest in der offenen Gebrauchslage mit den Seitenwänden zu verbinden, wobei die offene Lage eine im wesentlichen kastenförmige Anordnung des Behälters definiert.

3. Vorrichtung nach Anspruch 2, dadurch gekennzeichnet, daß die Haltemittel mindestens eine Nase (12) an einer freien Kante (14) der Bodenplatte (6) und mindestens eine an der Bodenkante einer der Seitenwände (5) ausgebildete Kerbe (13) enthalten und die minde stens eine Nase geeignet ist, in der mindestens einen Kerbe einzurasten, um den Behälter in der offenen Gebrauchslage zu arretieren.

## Revendications

1. Outillage pour le moulage d'un conteneur en plastique, comprenant au moins quatre faces (2, 3, 4, 5) fermées par une base (6) lesdites faces étant reliées par leurs bords et formant un angle de construction à la jonction de leurs arêtes, ledit angle étant soit un angle de sensiblement 90°, dans une condition d'utilisation dudit conteneur, soit un angle de sensiblement 0°, à l'état plié dudit conteneur, ledit outillage comprenant un moule conformé de telle manière que les faces adjacentes du conteneur forment un angle de moulage (A) qui est différent de l'angle de construction, une rainure (7, 8, 9, 10) étant prévue au niveau de chaque arête de liaison, le conteneur étant pliable au niveau desdites arêtes de liaison pour définir une position d'utilisation ouverte et une position aplatie fermée, après extraction du moule ; ladite base (6) étant moulée dans le plan d'une (3) des faces tandis qu'elle est reliée à l'une des faces par une arête de liaison ; un rainure (11) étant prévue au niveau de l'arête de liaison ; dans ladite position d'utilisation ouverte, ladite base étant sensiblement perpendiculaire à toutes lesdites faces ; caractérisé en ce que ledit angle de moulage (A) est d'environ 45°, et en ce que lesdites rainures (7, 8, 9, 10, 11) ont une section transversale sensiblement triangulaire.

2. Outillage selon la revendication 1, caractérisé en ce que la base du conteneur est reliée à une première (3) des faces par une arête de liaison, des moyens de retenue (12, 13) de ladite base étant prévus pour la bloquer ainsi que lesdites faces dans au moins la position d'utilisation ouverte qui définit la configuration dudit conteneur sous la forme d'une voûte.

3. Outillage selon la revendication 2, caractérisé en ce que les moyens de retenue comprennent au moins une patte (12) associée à la base (6) au niveau de son bord libre (14) et au moins une encoche (13) formée dans le bord inférieur de l'une des faces (5), chaque patte étant propre à pénétrer dans l'encoche correspondante pour bloquer ledit conteneur dans ladite position d'utilisation ouverte.
